# FASCICULE DE BREVET EUROPEEN

(11) **EP 0 790 553 B1**
(45) Date de publication et mention de la délivrance du brevet: **25.04.2001**
(21) Numéro de dépôt: 96400319.8
(22) Date de dépôt: 16.02.1996
(51) Int. Cl.: G06F 9/44

(54) **Outil de génération et d'exécution de commandes à interface graphique**
Werkzeug zur Erzeugung und Ausführung von graphischen Benutzerschnittstellenbefehlen
Tool for generating and executing graphical commands

(43) Date de publication de la demande: 20.08.1997
(73) Titulaire: BULL S.A., 78430 Louveciennes (FR)
(72) Inventeur: Bassier, Jean-François, F-94370 Sucy en Brie (FR); Sitbon, Gérard, F-94400 Vitry (FR); Champeval, Didier, F-78370 Plaisir (FR); Levillain, Olivier, F-78890 Garancieres (FR)

(56) Documents cités:
- EP-A- 0 564 845
- WO-A-93/20511
- NEC RESEARCH AND DEVELOPMENT, vol. 32, no. 1, Janvier 1991, TOKYO, JP, pages 130-142, XP000229428 OSAMU MIKAMI & KAZUSHI SUGYO:: "Heterogenous Computing Environment "Couple""

## Description

La présente invention concerne un outil de génération et d'exécution de commandes à interface graphique. Elle est plus particulièrement applicable à un système informatique comprenant une pluralité de plates-formes hétérogènes reliées par un réseau supportant une pluralité de protocoles de communication.

Dans la pratique courante actuelle, les systèmes informatiques utilisés sont de plus en plus complexes. Ils se composent d'une pluralité de plates-formes de types divers (de constructeurs différents) et de tailles différentes (petits, moyens, gros ordinateurs), possédant des protocoles de communication tant internes qu'externes de nature différente, et reliées entre elles par un réseau.

### LE PROBLEME POSE

L'un des problèmes importants qui se posent à tout tout utilisateur d'un tel système est de pouvoir piloter, à intervalles réguliers, par l'intermédiaire de son administrateur chargé des opérations de gestion lourdes et complexes, l'ensemble des plates-formes qui le composent. Il en est ainsi, par exemple, pour les opérations de sauvegarde régulières (quotidiennes, hebdomadaires, mensuelles) des données inscrites dans chacune des plates-formes (que l'on appelle également de manière courante "machines" ). Il peut s'agir par exemple de la sauvegarde des fichiers enregistrés sur les disques de ces plates-formes.

### LES SOLUTIONS DE L'ART ANTERIEUR

A cet effet, deux techniques sont actuellement utilisées :
1. La première consiste à écrire sur chaque machine, des scénarii de commandes, que l'homme du métier désigne habituellement sous le nom de "scripts", et à les exécuter autant de fois qu'il y en a.
   Cette technique nécessite:
   - une connaissance à priori des moyens d'acheminement de la commande, spécifiques de chaque machine,
   - une connexion à chacune des machines, ou un mécanisme d'exécution de tâche à distance,
   - une connaissance de la syntaxe de lancement des scripts,
2) La deuxième consiste à :
   - a) décrire chaque objet (voir plus bas la définition d'un objet) à piloter dans une Base de données commune appelée MIB (Management Information Base, en anglais),
   - b- à développer un moyen (appelé agent) de pilotage de l'objet selon les informations définissant celui-ci contenues dans cette base,
   - c) développer une application d'utilisation à distance de cet agent.

On appelle **objet** tout élément structurel, matériel et logiciel, appartenant à une machine d'un système informatique, que l'on cherche à piloter à distance depuis l'utilisateur final. Ainsi, l'objet peut être une mémoire à disques qu'on appelle également disque pour simplifier dans la suite du texte, ou encore un dérouleur de bande, ou encore un routeur. Quant à **l'utilisateur final**, il s'agit le plus souvent soit de l'administrateur central du système, soit de l'opérateur humain qui conduit les opérations de pilotage.

Cette technique nécessite :
- l'existence d'un protocole de communication entre l'application de commande et l'agent;
- la prise en compte, par les trois moyens cités plus hauts (MIB, agent, application d'utilisation de commande), des évolutions de chaque objet à piloter ainsi que de chacun de ses attributs.

Quelle que soit l'une des deux techniques utilisées, les opérations de pilotage sont longues et compliquées.

La présente invention permet de remédier à ces inconvénients et permet de réaliser le pilotage de manière extrêmement rapide, sans connaissance à priori par l'administrateur des différents modes de communication utilisés pour chacune des plates-formes.

### L'OBJET DE L'INVENTION

Selon l'invention, l'outil de génération et d'exécution de commandes à interface graphique pour un système informatique comprenant une pluralité de plates-formes hétérogènes reliées par un réseau supportant une pluralité de protocoles de communication, est caractérisé en ce qu'il comprend :
- un fichier descripteur contenant la description de l'interface graphique à réaliser selon une grammaire propre à l'outil,
- des moyens de vérification de la grammaire assurant la cohérence lexicale du fichier descripteur,
- des moyens de génération d'une représentation graphique, connectés aux moyens de vérification d'une part, et aux outils de l'interface graphique d'autre part,
- des moyens de contrôle syntaxique des informations saisies par l'utilisateur sur la représentation graphique,
- des moyens d'encapsulation des attributs de chaque commande à exécuter sur la (es) plate-forme (s) cible (s), pour une pluralité de protocoles de communication,
- des moyens de réception des attributs de chaque commande et d'exécution de celle-ci selon ceux-ci.

D'autres caractéristiques et avantages de la présente invention apparaîtront dans la description suivante donnée à titre d'exemple non limitatif et en se référant aux dessins annexés. Sur ces dessins :

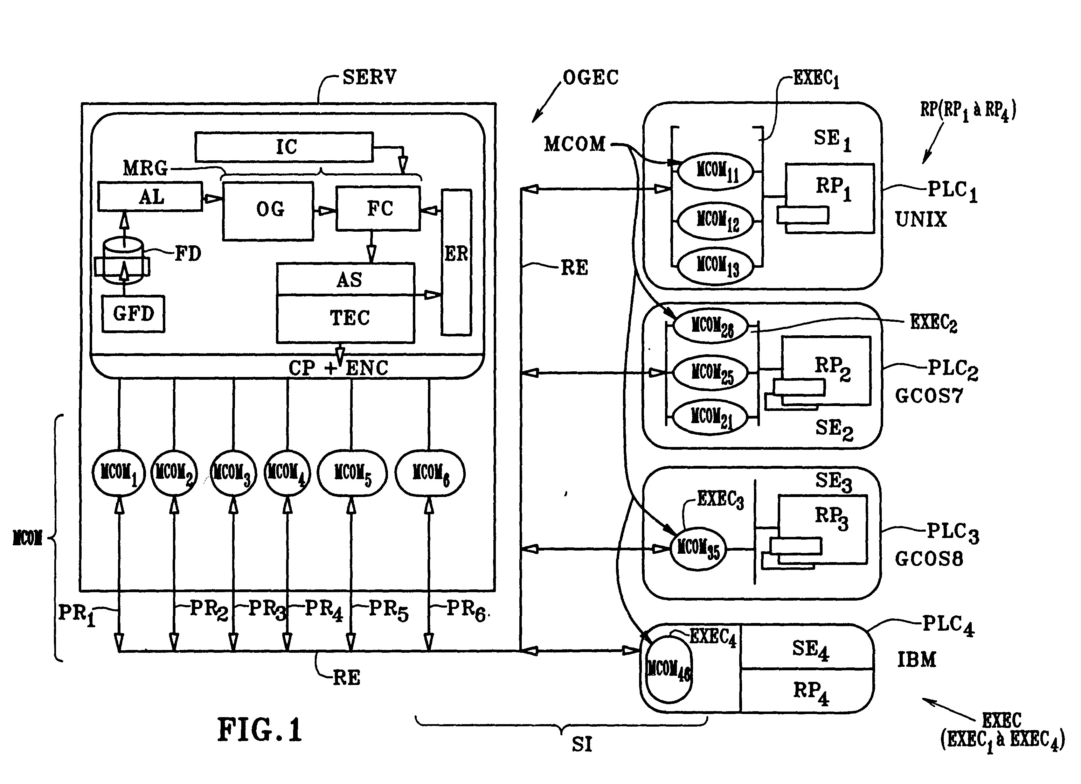

- la figure 1 montre le schéma d'ensemble de l'outil de génération et d'exécution de commande selon l'invention,

### DESCRIPTION D'UN EXEMPLE DE REALISATION DE L'INVENTION

### 1) STRUCTURE DE L'OUTIL SELON L'INVENTION :

On considère cette figure 1 qui montre les différents éléments constitutifs essentiels de l'outil de génération et d'exécution de commandes, selon l'invention, que nous désignerons sous l'appellation d'OGEC.

Ces différents éléments sont :
- **le fichier descripteur FD** contenant la description de l'interface graphique à réaliser selon une grammaire propre à l'outil, associé à un éditeur GFD de fichiers descripteurs,
- **les moyens de vérification de la grammaire** assurant la cohérence lexicale du fichier descripteur, encore appelés **analyseur lexical AL,**
- **les moyens de génération d'une représentation graphique MRG,** connectés aux moyens de vérification AL d'une part, et aux moyens de contrôle syntaxique AS d'autre part,
- **les moyens de contrôle syntaxique** des informations saisies par l'utilisateur sur la représentation graphique, encore appelés **analyseur de syntaxe AS,**
- **le commutateur de protocole CP associé à des moyens d'encapsulation ENC** des attributs de chaque commande à exécuter sur la (es) plate-forme (s)-cible (s), qui permet d'envoyer les commandes au moyen d'une pluralité de protocoles de communication, chaque protocole permettant de communiquer avec une plate-forme - cible déterminée.
- **les moyens** de réception des attributs de chaque commande et d'exécution de celle-ci selon ceux-ci, désignés par **EXEC.**

Les moyens de génération d'une représentation graphique comprennent, ainsi qu'il est visible à la figure 1 :
- des objets de gestion OG de l'interface graphique. Celle-ci, dans l'exemple de réalisation décrit ici, est de préférence, de type X/motif (Marque déposée).
- une fenêtre de commande FC associée aux objets de gestion OG,

L'éditeur GFD, le fichier descripteur FD, les moyens de génération MRG, l'analyseur de syntaxe AS, et les moyens d'encapsulation ENC, qui sont associés à des moyens MCOM de communication (en fait, des moyens d'émission des commandes, pour ce qui est du serveur), sont contenus dans une plate-forme de commande, également appelée serveur (qu'on appelle également moniteur dans le langage de l'homme du métier) SERV, associée à l'utilisateur final.

Ce dernier contient également :
- l'interface contextuelle IC,
- des moyens de traitement d'erreurs TER,
- des moyens de tests d'existence de la commande, à savoir TEC.
les moyens de réception et d'exécution EXEC sont associés à un répertoire de commandes RP.

### 2) FONCTION DES DIFFERENTS ELEMENTS :

Les fonctions détaillées spécifiques de chacun des éléments mentionnés ci-dessus sont les suivantes :
**Editeur GFD :** c'est un ensemble de fonctionnalités qui permet de générer des fichiers descripteurs sans ou à partir d'un autre fichier descripteur.
**Fichier descripteur FD :** il est créé soit par un éditeur du monde UNIX (Marque déposée) - ce dernier peut, par exemple, être de type VI ou EMACS, qui sont parfaitement connus de l'homme du métier spécialiste du monde UNIX (Marque déposée) - ou encore à partir de l'éditeur GFD défini ci-dessus. Son contenu est en accord avec la grammaire qui est décrite en annexe 1.

Pour une meilleure compréhension, on fournit un exemple de fichier descripteur en annexe 2.
**Analyseur lexical AL :** il analyse les lignes du fichier descripteur FD et en fonction de la dite grammaire, génère un ensemble d'objets X/Motif (Marque déposée) dans la grille de commande (voir exemple annexe 3) ou un ensemble d'erreurs s'il y a incohérence dans le contenu du fichier descripteur.
**Interface contextuelle IC :** elle permet de transmettre, en fonction de l'environnement applicatif, un ensemble d'informations à la fenêtre de commande FC définie ci-dessous, ce qui facilite la saisie des informations pour l'utilisateur final.

A titre indicatif, la liste des machines-cibles qui est contenue dans un fichier local ou distant, par exemple de type "/etc/hosts" (parfaitement connu de l'homme du métier spécialiste du monde UNIX "Marque déposée") est transmise à la fenêtre de commande FC sur demande de l'utilisateur.

Un autre exemple est d'utiliser l'interface de type API (sigle anglais de Application Programmating Interface) d'ISM (Integrated System Management) "Marque déposée" pour avoir la liste des disques de l'ensemble des plates-formes qui sont sélectionnés dans une fenêtre d'une application d'ISM.
**Objets de gestion OG** : on a associé un certain nombre d'objets X/Motif "Marque déposée" (XmText, XmScrolledList, XmForm, XmRadioBox,.voir annexe 3.....) à la grammaire définie ci-dessus.
**Fenêtre de commande FC** : elle permet d'obtenir une représentation de la commande avec l'ensemble de ses paramètres. Ceci se fait au moyen du système de visualisation graphique (plus communément appelé sous le vocable anglo-saxon de "look & feel") de l'interface graphique X/Motif (Marque déposée). A chaque paramètre, on peut associer un texte d'aide à l'utilisateur. Une grille de commandes visualisée est fournie à l'annexe 3.
**Analyseur de syntaxe AS** : il permet un contrôle de cohérence de chaque champ de saisie de la fenêtre de commande, en fonction du type du paramètre. Par exemple, si ce dernier est alphanumérique, l'utilisateur est averti lorsqu'il emploie des caractères alphabétiques.
**Moyens de tests d'existence de la commande TEC** : avant l'exécution d'une commande, ils permettent de vérifier que celle-ci est bien disponible sur la machine - cible en interrogeant cette dernière pendant l'opération de saisie de la commande .
**Moyens de Traitement des erreurs TER** : pour tous les cas d'erreurs mentionnés ci-dessus, il permet de dialoguer avec l'utilisateur final qui saisit les paramètres dans la fenêtre de commande et demande l'exécution de la commande associée en lui signalant le type d'erreur. De même, ce module traite les erreurs résultant de l'exécution des commandes.
**Commutateur de protocole CP** : il permet d'envoyer les paramètres de la commande grâce aux moyens de communication MCOM choisi par l'utilisateur selon l'un des critères suivants :
   - sélection préétablie choisie par l'utilisateur
   - au moyen d'une table de correspondance entre la plate-forme-cible et le ou les moyens de communication disponibles sur cette plate-forme,
   - automatiquement sur le premier moyen de communication disponible sur cette plate-forme au moment où l'on veut transmettre la commande.
Ainsi qu'indiqué plus haut, le commutateur CP est étroitement associé à des moyens d'encapsulation de protocole ENC qui accompagnent les attributs de chaque commande des éléments spécifiques de chaque protocole.

Le serveur SERV est relié par l'intermédiaire d'un réseau RE aux différentes plates-formes-cibles PLC1 à PLCn, dont seulement quatre ont été représentées à la figure 1, pour simplifier. Ces 4 plates-formes sont donc PLC1 à PLC4. Chacune d'entre elles est supposée mettre en oeuvre un système d'exploitation différent SE1 à SE4. Ceux-ci sont, par exemple, respectivement du type UNIX (Marque déposée), GCOS7 et GCOS8, ces deux derniers étant spécifiques de la société demanderesse et commercialisés par celle-ci, ou encore du type MVS de la firme IBM (Marque déposée).

Suivant le type de plate-forme, on utilise sur le réseau RE un protocole de communication déterminé, étant entendu que le support physique des différentes liaisons de communication qui correspondent à chacune des plates-formes leur est commun, à savoir celui spécifique du réseau RE. Du côté du serveur SERV, ces protocoles sont mis en oeuvre par les moyens de communication MCOM.

A chacune des plates-formes PLC1 à PLC4, correspondent des moyens de réception et d'exécution de chaque commande spécifiques, à savoir EXEC1 à EXEC4. Par ailleurs, chacune d'entre elles possède un répertoire de commandes, à savoir RP1 à RP4. Ce dernier contient un ensemble de commandes dans lesquelles sont décrites les actions à effectuer en fonction des paramètres saisis par l'utilisateur final.

Il est évident que l'ensemble des moyens EXEC1 à EXEC4 forme les moyens de réception et d'exécution EXEC définis plus haut. De même, l'ensemble des répertoires de commandes RP1 à RP4 forme le répertoire de commande global RP défini plus haut.

Dans un exemple de réalisation préféré de l'invention, on utilise les protocoles de communication PR1 à PR6 suivants, à savoir respectivement RPC, Rshell en abrégé RSH, CMIP, SNMP, SNA, SQL*NET auxquels correspondent des moyens de communication MCOM1 à MCOM6.

Tous ces protocoles sont bien connus de l'homme du métier. On se limitera donc à en décrire brièvement les aspects qui sont plus particulièrement utiles à l'outil OGEC selon l'invention.

Le protocole RPC permet la communication entre plates-formes différentes, par exemple SERV et PLC1. RPC est le sigle anglais de Remote Procedure Call qui signifie Appel de Procédure à Distance. Il est particulièrement attractif à cause des aspects suivants :
- l'appelant active une fonction de l'appelé comme si l'appelé était situé sur la même plate-forme;
- de la même façon, l'appelé traite les fonctions comme si l'appelant était situé sur la même plate-forme;
- le mode de passage des paramètres d'entrée et de sortie est le même;
- les conversions de présentation sont automatiques (EBCDIC/ASCII, par exemple).

Ce mode de communication est utilisé ici principalement pour les plates-formes-cibles dont la représentation de données est différente de celle du serveur SERV. Les arguments de la commande à envoyer sont ici les paramètres d'appel.

Le langage de commande shell assure, dans le monde UNIX (Marque déposée), l'interface externe entre les utilisateurs et le système d'exploitation. Il permet de lancer des commandes UNIX soit de manière interactive, soit à partir d'un fichier de commande, appelé fichier script. Le protocole rshell à distance (rshell : remote shell) est une extension du précédent dans le sens où il permet de lancer des commandes UNIX sur une machine distante.

Ce mode de communication est ici principalement utilisé pour faire converser des machines UNIX (Marque déposée) entre elles. Les arguments de la commande à envoyer sont ici directement codés par les moyens de communication MCOM2 mettant en oeuvre ce protocole, sous une forme très simple, ASCII par exemple.

Le protocole SNMP est né du besoin d'avoir un protocole d'administration simple pour les systèmes informatiques comportant un ensemble de machines (plates-formes) distribuées en réseau. SNMP est le sigle anglais de Simple Network Management Protocol. Il permet la communication entre un gestionnaire d'administration et des gestionnaires d'objets (par exemple un routeur, disque, dérouleur de bande) à gérer, appelés agents.

Ce protocole autorise trois actions qui sont : la récupération d'informations (appelée "get"), le positionnement d'informations (appelée "set"), et la remontée spontanée d'informations (appelée "event"). Il définit également les bases de données communes (M.I.B).

Il est donc ici principalement utilisé pour les objets déjà décrits dans la M.I.B mais dont le mode d'accès n'autorise pas la modification par l'utilisateur(set).

Les protocoles de type SNA ou SQL*NET sont respectivement utilisés pour accéder à des plates-formes du constructeur de systèmes informatiques IBM (Marque déposée), ou à des plates-formes qui supportent le langage standard (SQL) de commandes de bases de données.

La plate-forme-cible PLC1 comprend donc, à l'intérieur des moyens EXEC1 des moyens de réception capables de communiquer avec les moyens d'émission correspondants de SERV, et ce, pour les protocoles RPC, RSH, SNMP, CMIP et SQL*NET.

Ces moyens sont désignés par MCOM11, MCOM12, MCOM16, à l'intérieur d'EXEC1.

De la même façon, PLC2 comprend des moyens de réception adaptés aux protocoles RPC, SNA, SQL*NET, soit MCOM21, MCOM25, MCOM26 à l'intérieur d'EXEC2.

PLC3 comprend les moyens de réception adaptés au protocole ISO/DSA (propre à la société demanderesse) ou TCP/IP., soit MCOM35 à l'intérieur d'EXEC3.

PLC4 comprend les moyens de réception adaptés au protocole SNA, soit MCOM46 à l'intérieur d'EXEC4.

### 3) DESCRIPTION D'UN EXEMPLE D'ENVOI DE COMMANDES :

On suppose que l'on désire effectuer depuis le serveur SERV qui sert d'administrateur central du système informatique SI qui inclut SERV et l'ensemble de plates-formes PLC1 à PLC4, les opérations nécessaires à l'archivage de tous les fichiers contenus sur tous les supports magnétiques de PLC1 à PLC4, dont on supposera pour simplifier qu'il s'agit de disques magnétiques.

L'éditeur GFD (ou bien un éditeur type VI ou EMACS) génère un fichier descripteur FD dont le contenu est en accord avec la grammaire telle que présentée à l'annexe 1. Ce dernier dont le titre "title" conforme à la grammaire écrite suivant la norme "BNF" (Backus-Naur Format) comme indiqué à la première ligne de l'annexe 1, est "Archivage de Fichiers sur Supports Magnétiques", est montré à l'annexe 2. On peut aisément vérifier sur celle-ci que les interfaces de scripts successives utilisées dans ce fichier, par exemple "title, help, script, param action, param device, param indirect, param file et param verbose" sont bien conformes à cette grammaire.

Les différentes lignes de FD sont alors analysées par l'analyseur lexical AL, qui, en fonction de la grammaire de l'annexe 1, génère un ensemble d'attributs de commandes qui est ensuite traité par les objets de gestion OG et visualisé dans la fenêtre de commande FC avec le "look&feel" X/Motif (Marque déposée) pour donner ce qui est présenté en annexe 3. Cela permet, par exemple, à l'opérateur humain de SERV de contrôler les opérations d'archivage de manière simple et conviviale.

Cet ensemble d'attributs de commandes passe alors par l'analyseur de syntaxe AS qui en effectue le contrôle de cohérence puis par les moyens de tests TEC, qui vérifient, pour chaque commande de l'ensemble, que celle-ci est bien disponible sur la machine-cible, qu'on supposera être par exemple la plate-forme PLC1.

L'ensemble est transmis au commutateur de protocole CP qui choisit par exemple le protocole PR1 (RPC). Les moyens d'encapsulation ENC munissent l'ensemble de commandes des paramètres d'envoi des commandes propres au protocole PR1, ici les paramètres d'appel.

La suite des attributs de l'ensemble est alors émise par les moyens de communication MCOM1 et parvient par l'intermédiaire du réseau RE aux moyens de communication MCOM11 de la plate-forme-cible PLC1.

Ces derniers, après analyse du protocole PR1, présentent les paramètres qui deviennent les attributs de la commande à exécuter. Une fois cela fait, la commande est exécutée par les moyens d'exécution propre à EXEC1 en fonction du contenu du répertoire de commandes RP1.

### 4) AVANTAGES DE L'OUTIL SELON L'INVENTION :

Ainsi réalisé, l'outil selon l'invention offre les avantages suivants :
- toutes les commandes ont un "look&feel" unique, quelle que soit la plate-forme PLC1 à PLC4,
- introduction aisée et rapide de nouvelles commandes de la part de l'utilisateur final,
- habillage de commandes spécifiques d'un système d'exploitation déterminé (UNIX "Marque déposée") selon le langage propre à un autre système d'exploitation (GCOS7-8),
- adaptation de cet outil aux besoins et aux contraintes des utilisateurs finaux, du fait de la possibilité d'utiliser un grand nombre de protocoles de communication.

### Annexe 1

Voici la description sous forme BNF (norme Backus Naur Format) de la grammaire des interfaces de scripts :

Les symboles terminaux sont indiqués entre quotes simples.

Par exemple : 'xyz' denote la chaine de caractères xyz dans le fichier. Les symboles terminaux peuvent aussi contenir des expressions regulières.

Les autres symboles sont des symboles non terminaux.

Les alternatives sont dénotées par un et regroupées par des accolades ex:{A E|B} dénotées soit A et E soit B.

Les parties optionnelles sont indiquées entre crochets.

Par exemple : [C] dénote que C est optionnel.

Les annotations entre parenthèses sont des commentaires sur la grammaire.

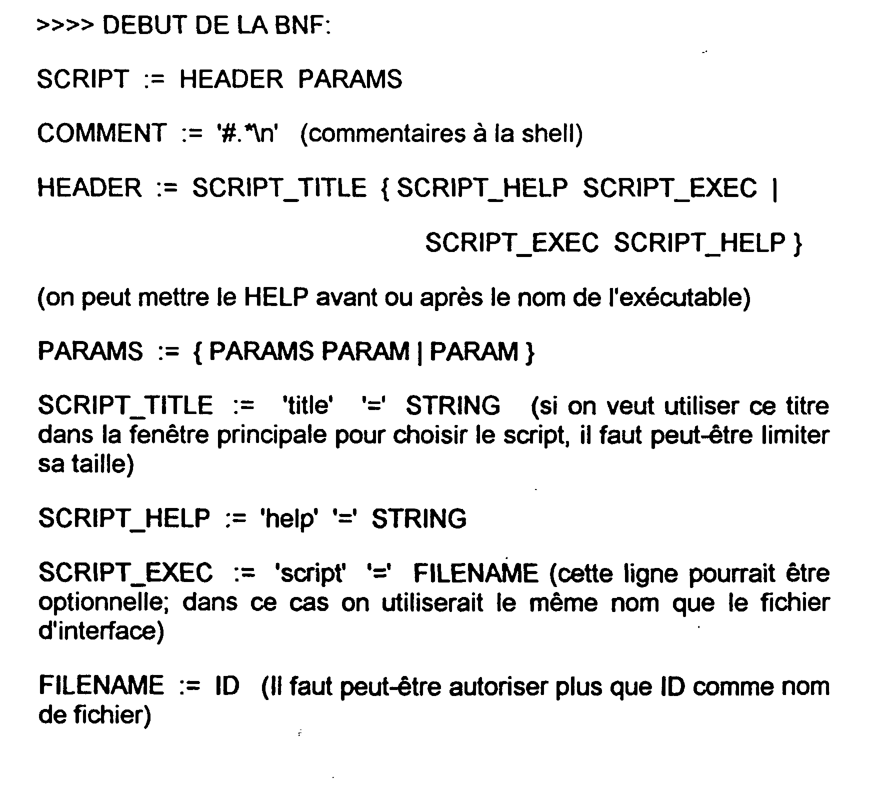

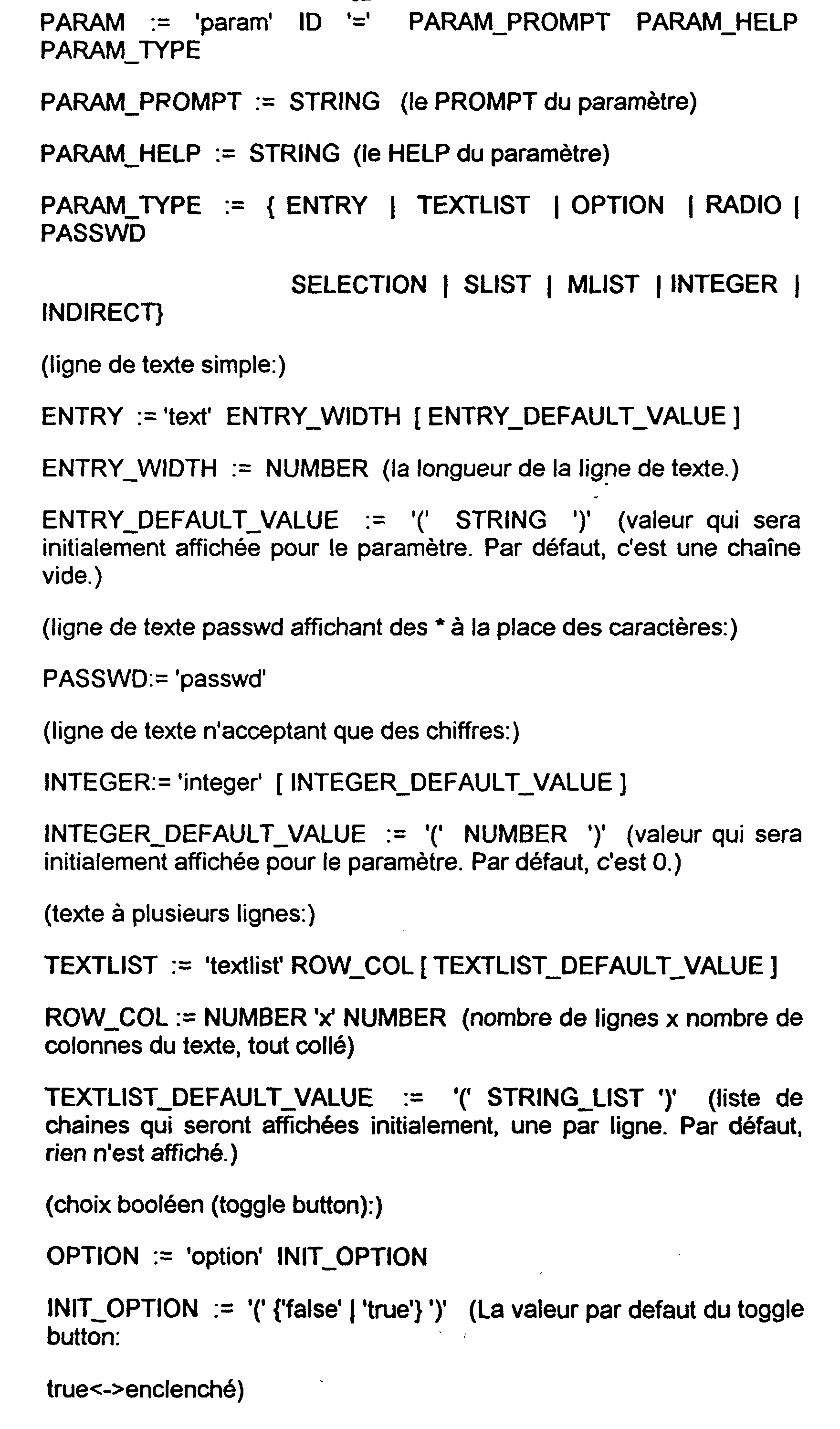

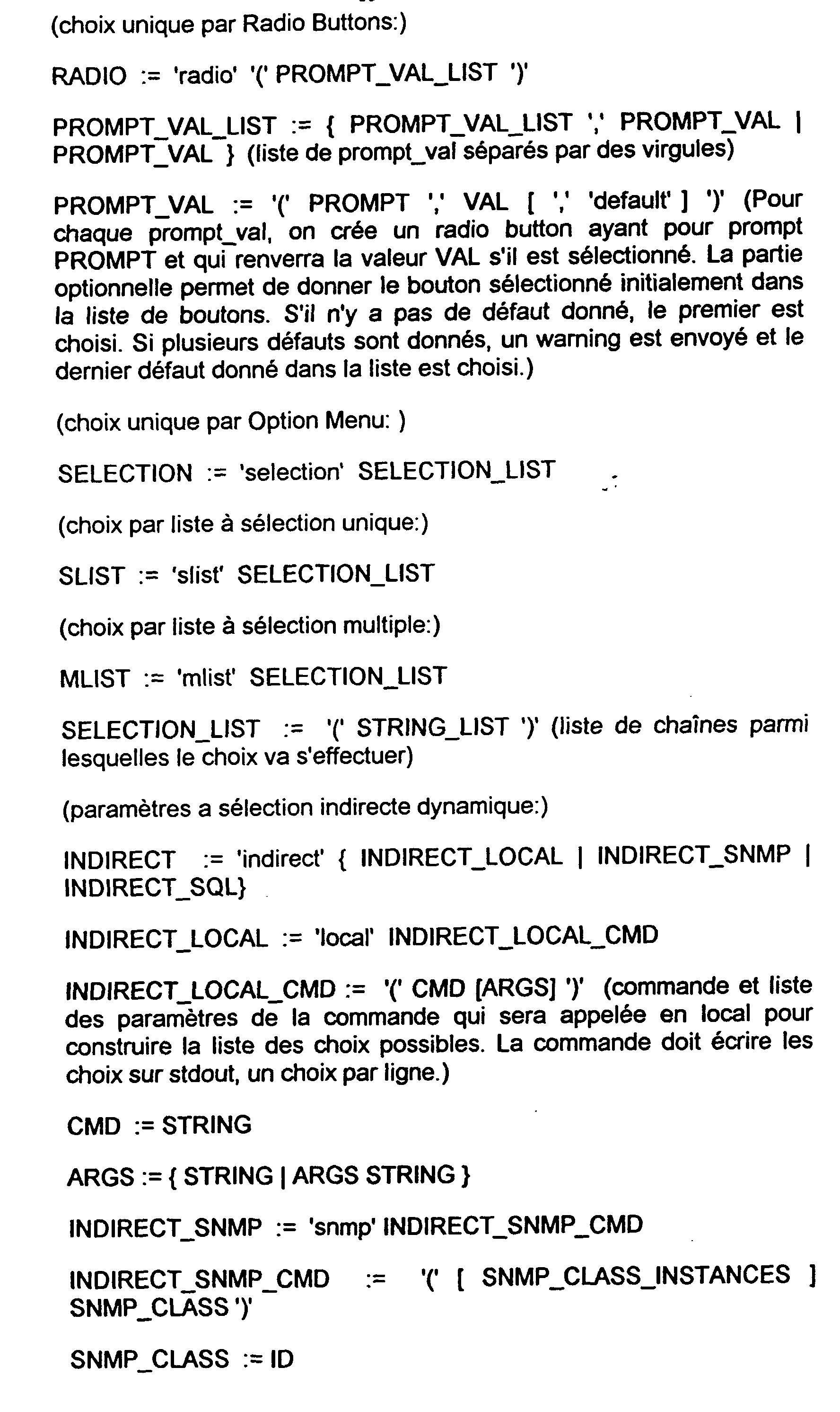

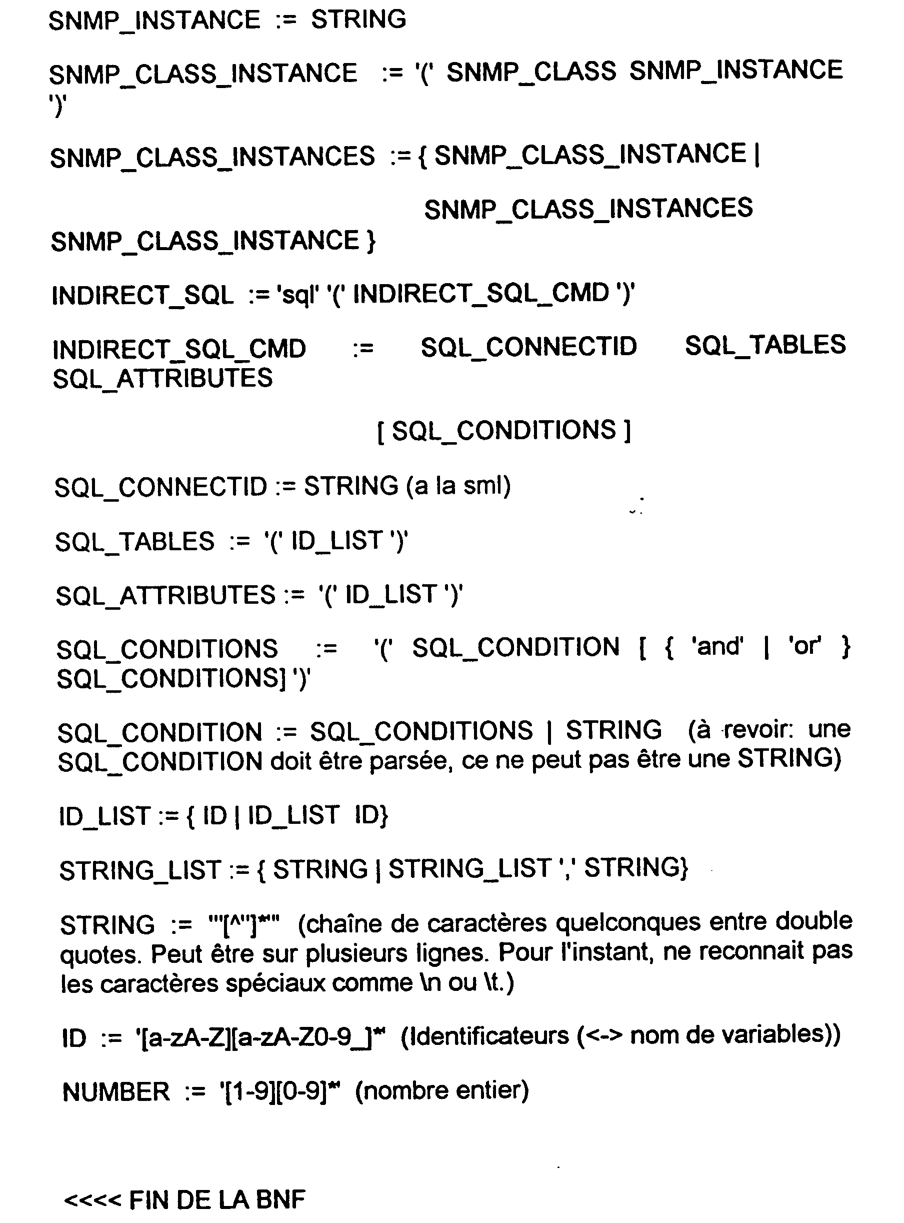

On peut rajouter des types, par exemple FREE_INTEGER qui serait une ligne de texte qui n'accepte que des entiers ou BOUND_INTEGER qui serait une XmScale ...

### Annexe 2

### Exemple de fichier descripteur FD:

**title**="Archivage de Fichiers sur Support Magnétique"
**help**="Cette commande vous permet de :
- sauvegarder une arborescence sur cassette
- afficher la liste des fichiers enregistrés sur le support
- restaurer une arborescence à partir d'une cassette"
**script**=tar ;
**param** action= "action" ;
"Choisissez votre option dans le menu :
- 'extraire' pour restaurer l'arborescence ;
- 'afficher' pour lister les fichiers de l'arborescence ;
- 'copier' pour sauvegarder l'arborescence ;
- 'ajouter' pour ajouter une arborescence sur le meme support ;
- 'mise a jour' pour remplacer une arborescence par une copie plus récente" ;
selection ("extract","list","create","append","update") ;
**param** device= "nom du média" ;
"Donner le nom du media où se trouve la cassette (souvent /dev/rmt0)" ;
text 50 ("/dev/rmt0") ;
**param** trans="type du transfert" ;
"choisir répertoire si l'on transfert un répertoire ;
fichier si l'on transfert des fichiers ;
liste si on utilise un fichier contenant la liste des fichiers à transferer" ;
radio(("liste","liste") ;
("fichier","fichier") ;
("repertoire","repertoire",default) ;
**param** files= "répertoire" ;
"Donner le nom du/des répertoires ou du/des fichiers de commande ; ou du/des fichiers à passer à l'archiveur" ;
textlist 10x32 ;
**param** verbose= "mode bavard" ;
"sélectionner le bouton si vous voulez ;
afficher l'ensemble des opérations" ;
option(false).

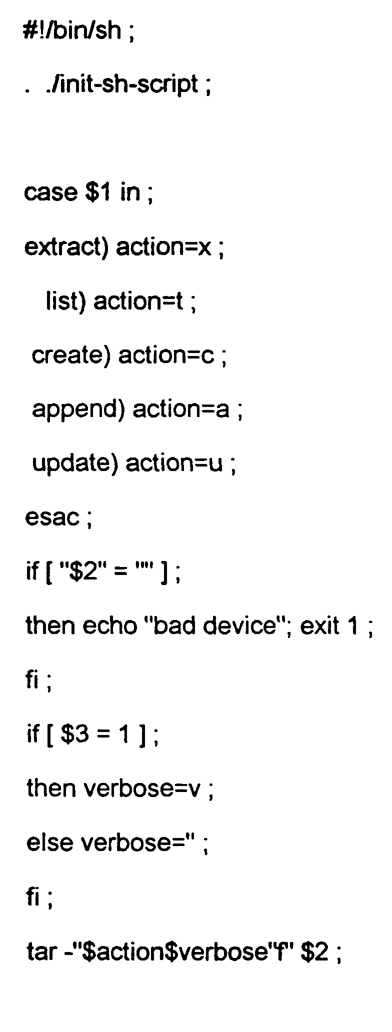

### Annexe 3

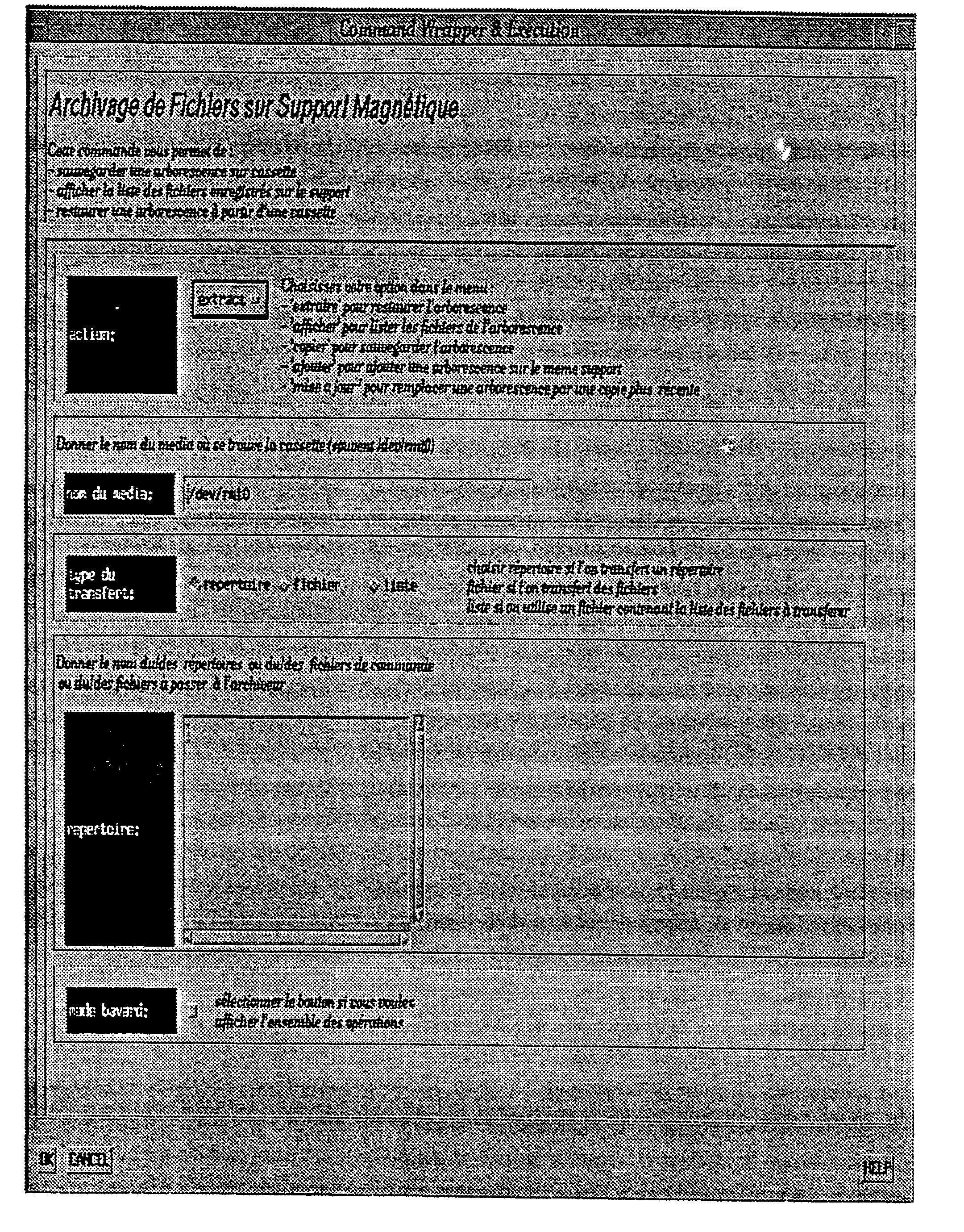

## Revendications

1. Outil de génération et d'exécution de commandes à interface graphique (OGEC) pour un système informatique (SI) comprenant une pluralité de plates-formes ( PLC1 à PLC4) hétérogènes reliées par un réseau (RE) supportant une pluralité de protocoles de communication (PR1 à PR6), caractérisé en ce qu'il comprend :
- un fichier descripteur (FD) contenant la description de l'interface graphique à réaliser selon une grammaire propre à l'outil,
- des moyens de vérification de la grammaire (AL) assurant la cohérence lexicale du fichier descripteur (FD),
- des moyens de génération d'une représentation graphique (MRG), connectés aux moyens de vérification d'une part, et aux outils de l'interface graphique d'autre part,
- des moyens de contrôle syntaxique (AS) des informations saisies par l'utilisateur sur la représentation graphique,
- des moyens d'encapsulation (ENC) des attributs de chaque commande à exécuter sur la (es) plate-forme (s) cible (s) (PLC1 à PLC4), pour une pluralité de protocoles de communication (PR1 à PR6),
- des moyens de réception des attributs de chaque commande et d'exécution (EXEC1 à EXEC4) de celle-ci selon ceux-ci.

2. Outil selon la revendication 1 caractérisé en ce que le fichier descripteur (FD) est associé à un éditeur (GFD) constitué par un ensemble de fonctionnalités de génération de fichiers descripteurs et à un éditeur du monde UNIX (Marque déposée).

3. Outil selon la revendication 1, caractérisé en ce que les moyens de vérification de la grammaire sont constitués par un analyseur lexical qui analyse les lignes du fichier descripteur et en fonction de la dite grammaire, génère un ensemble de commandes ou un ensemble d'erreurs s'il y a incohérence dans le contenu du fichier descripteur (FD).

4. Outil selon la revendication 2, caractérisé en ce que les moyens de génération d'une représentation graphique (MRG) comprennent :
- des objets de gestion de l'interface graphique (OG),
- une fenêtre de commande (FC) associée à ces objets.

5. Outil selon la revendication 4, caractérisé en ce que les objets de gestion (OG) de l'interface graphique sont de type X/Motif (Marque déposée).

6. Outil selon la revendication 5, caractérisé en ce que la fenêtre de commande (FC) permet de visualiser la commande avec l'ensemble de ses paramètres au moyen du système de visualisation graphique (look&feel) de l'interface graphique X/Motif (Marque déposée), chaque paramètre étant associé à un texte d'aide à l'utilisateur.

7. Outil selon la revendication 4, caractérisé en ce que les moyens de contrôle syntaxique sont constitués par un analyseur de syntaxe (AS) assurant le contrôle de cohérence de chaque champ de saisie de la fenêtre de commande (FC), en fonction du type de paramètre de celle-ci.

8. Outil selon la revendication 4, caractérisé en ce que les moyens d'encapsulation (ENC) sont associés à un commutateur de protocole (CP) qui permet d'envoyer les commandes aux différentes plates-formes (PLC1 à PLC4) grâce à des moyens de communication (MCOM) choisis selon des critères prédéterminés établis par l'utilisateur de l'outil.

9. Outil selon la revendication 8, caractérisé en ce que l'éditeur (GFD), le fichier descripteur (FD), les moyens de génération (MRG), l'analyseur de syntaxe (AS), les moyens d'encapsulation (ENC), les moyens de communication (MCOM), sont contenus dans une plate-forme de commande appelée serveur (SERV), les autres plates-formes (PLC1 à PLC4) étant appelées plates-formes-cibles ou machines-cibles, le serveur (SERV) contenant en outre des moyens de tests d'existence de toute commande permettant de vérifier que celle-ci est effectivement disponible sur la machine-cible à laquelle elle est destinée.

## Patentansprüche

1. Werkzeug (OGEC) zum Erzeugen und Ausführen von Befehlen mit graphischer Schnittstelle für ein Datenverarbeitungssystem (SI), das mehrere heterogene Plattformen (PLC1 bis PLC4) umfaßt, die durch ein Netz (RE) verbunden sind, das mehrere Kommunikationsprotokolle (PR1 bis PR6) unterstützt, dadurch gekennzeichnet, daß es umfaßt:
- eine Deskriptor-Datei (FD), die die Beschreibung der graphischen Schnittstelle enthält, die gemäß einer dem Werkzeug eigenen Grammatik zu verwirklichen ist,
- Mittel (AL) zum Verifizieren der Grammatik, die die lexikalische Kohärenz der Deskriptor-Datei (FD) gewährleisten,
- Mittel (MRG) zum Erzeugen einer graphischen Darstellung, die einerseits mit den Verifikationsmitteln und andererseits mit dem Werkzeug der graphischen Schnittstelle verbunden sind,
- Mittel (AS) zur syntaktischen Kontrolle von Informationen, die vom Anwender auf der graphischen Darstellung erfaßt werden,
- Mittel (ENC) zum Einkapseln der Attribute jedes Befehls, der auf der (den) Zielplattform(en) (PLC1 bis PLC4) für mehrere Kommunikationsprotokolle (PR1 bis PR6) auszuführen ist,
- Mittel (EXEC1 bis EXEC4) zum Empfangen der Attribute jedes Befehls und zum Ausführen dieses gemäß jenen.

2. Werkzeug nach Anspruch 1, dadurch gekennzeichnet, daß der Deskriptor-Datei (FD) ein Editor (GFD), der durch eine Gesamtheit von Funktionalitäten zur Erzeugung von Deskriptor-Dateien gebildet ist, und ein UNIX-Welt-Editor (UNIX: eingetragene Marke) zugeordnet sind.

3. Werkzeug nach Anspruch 1, dadurch gekennzeichnet, daß die Mittel zum Verifizieren der Grammatik aus einem lexikalischen Analysator gebildet sind, der die Zeilen der Deskriptor-Datei analysiert und in Abhängigkeit von der Grammatik eine Gesamtheit von Befehlen oder dann, wenn im Inhalt der Deskriptor-Datei (FD) eine Inkohärenz vorhanden ist, eine Gesamtheit von Fehlern erzeugt.

4. Werkzeug nach Anspruch 2, dadurch gekennzeichnet, daß die Mittel (MRG) zum Erzeugen einer graphischen Darstellung umfassen:
- Objekte (OG) zum Steuern der graphischen Schnittstelle,
- ein Befehlsfenster (FC), das diesen Objekten zugeordnet ist.

5. Werkzeug nach Anspruch 4, dadurch gekennzeichnet, daß die Objekte (OG) zum Steuern der graphischen Schnittstelle vom Typ X/Motif (X/Motif: eingetragene Marke) sind.

6. Werkzeug nach Anspruch 5, dadurch gekennzeichnet, daß das Befehlsfenster (FC) die Sichtbarmachung des Befehls mit der Gesamtheit seiner Parameter mittels des graphischen Visualisierungssystems (look&feel) der graphischen Schnittstelle X/Motif (X/Motif: eingetragene Marke) ermöglicht, wobei jedem Parameter ein Hilfstext für den Anwender zugeordnet ist.

7. Werkzeug nach Anspruch 4, dadurch gekennzeichnet, daß die Mittel zur syntaktischen Kontrolle aus einem Syntaxanalysator (AS) gebildet sind, der die Kontrolle der Kohärenz jedes Erfassungsfeldes des Befehlsfensters (FC) in Abhängigkeit vom Typ seines Parameters gewährleistet.

8. Werkzeug nach Anspruch 4, dadurch gekennzeichnet, daß den Einkapselungsmitteln (ENC) ein Protokoll-Kommutator (CP) zugeordnet ist, der ermöglicht, die Befehle an die verschiedenen Plattformen (PLC1 bis PLC4) kraft der Kommunikationsmittel (MCOM) zu schicken, die entsprechend vorgegebenen Kriterien gewählt werden, die vom Anwender des Werkzeugs erstellt werden.

9. Werkzeug nach Anspruch 8, dadurch gekennzeichnet, daß der Editor (GFD), die Deskriptor-Datei (FD), die Erzeugungsmittel (MRG), der Syntaxanalysator (AS), die Einkapselungsmittel (ENC) und die Kommunikationsmittel (MCOM) in einer Befehlsplattform, die Server (SERV) genannt wird, enthalten sind, wobei die anderen Plattformen (PLC1 bis PLC4) Ziel-Plattformen oder Ziel-Maschinen genannt werden, wobei der Server (SERV) außerdem Mittel zum Prüfen des Vorhandenseins jedes Befehls enthält, die die Verifikation ermöglichen, ob dieser Befehl in der Ziel-Maschine, für die er bestimmt ist, effektiv verfügbar ist.

## Claims

1. Tool for generating and executing graphic interface commands (OGEC) for a computer system (SI) comprising a plurality of heterogeneous platforms (PLC1 to PLC4) connected by a network (RE) supporting a plurality of communication protocols (PR1 to PR6), characterised in that it comprises:
- a descriptor file (FD) containing the description of the graphic interface to be produced according to a grammar specific to the tool,
- mean for verifying the grammar (AL) ensuring the lexical consistency of the descriptor file (FD),
- means for generating a graphic representation (MRG), connected to the verification means on the one hand, and to the graphic interface tools on the other hand,
- means for performing syntactic control (AS) on the information captured by the user on the graphic representation,
- means for encapsulating (ENC) the attributes of each command to be executed on the target platform(s) (PLC1 to PLC4), for a plurality of communication protocols (PR1 to PR6),
- means for receiving the attributes of each command and for executing (EXEC1 to EXEC4) said command according to said attributes.

2. Tool according to Claim 1 characterised in that the descriptor file (FD) is associated with an editor (GFD) constituted by an assembly of standard functions for generating descriptor files and with an editor of the UNIX (registered trade mark) world.

3. Tool according to Claim 1, characterised in that the grammar verification means are constituted by a lexical analyser that analyses the lines of the descriptor file and, depending on said grammar, generates a set of commands or a set of errors if there is inconsistency in the content of the descriptor file (FD).

4. Tool according to Claim 2, characterised in that the means for generating a graphic representation (MRG) comprise:
- graphic interface management objects (OG),
- a command window (FC) associated with these objects.

5. Tool according to Claim 4, characterised in that the management objects (OG) of the graphic interface are of the X/Motif (registered trade mark) type.

6. Tool according to Claim 5, characterised in that the command window (FC) makes it possible to display the command with all its parameters by means of the graphic display system (look&feel) of the X/Motif (registered trade mark) graphic interface, each parameter being associated with a user help text.

7. Tool according to Claim 4, characterised in that the syntactical control means are constituted by a syntax analyser (AS) ensuring control of the consistency of each data entry field of the command window (FC), depending on the type of parameter of said window.

8. Tool according to Claim 4, characterised in that the encapsulation means (ENC) are associated with a protocol switch (CP) that allows the commands to be sent to the various platforms (PLC1 to PLC4) by using communication means (MCOM) chosen according to the predetermined criteria established by the user of the tool.

9. Tool according to Claim 8, characterised in that the editor (GFD), the descriptor file (FD), the generation means (MRG), the syntax analyser (AS), the encapsulation means (ENC), the communication means (MCOM), are contained in a command platform called server (SERV), the other platforms (PLC1 to PLC4) being called target platforms or target machines, the server (SERV) also containing means for testing for the existence of any command making it possible to verify that said command is actually available on the target machine for which it is intended.
